Europäisches Patentamt

European Patent Office

Office européen des brevets

(19)

(11) Veröffentlichungsnummer : **0 073 012**
**B1**

(12) # EUROPÄISCHE PATENTSCHRIFT

(45) Veröffentlichungstag der Patentschrift :
**17.10.84**

(21) Anmeldenummer : **82107524.9**

(22) Anmeldetag : **18.08.82**

(51) Int. Cl.³ : **C 04 B 19/04, C 01 B 25/36,
C 04 B 29/02**

(54) **Härter für Wasserglaskitte.**

(30) Priorität : **22.08.81 DE 3133354**

(43) Veröffentlichungstag der Anmeldung :
**02.03.83 Patentblatt 83/09**

(45) Bekanntmachung des Hinweises auf die Patenterteilung : **17.10.84 Patentblatt 84/42**

(84) Benannte Vertragsstaaten :
**CH DE FR GB IT LI SE**

(56) Entgegenhaltungen :
**DE-B- 1 571 485**
**DE-B- 1 769 999**
**DE-B- 2 730 868**
**DE-C- 2 230 175**

(73) Patentinhaber : **HOECHST AKTIENGESELLSCHAFT**
**Postfach 80 03 20**
**D-6230 Frankfurt am Main 80 (DE)**

(72) Erfinder : **Schlegel, Albert, Dr.**
**Ulmenstrasse 93**
**D-6272 Niedernhausen/Taunus (DE)**

**Beschreibung**

Die vorliegende Erfindung betrifft einen Härter auf Phosphatbasis für Wasserglaskitte mit verbesserter Wasserbeständigkeit.

Im Chemie- und Feuerungsbau werden in großem Umfang säurefeste Wasserglaskitte eingesetzt. Diese Kitte werden aus einem säure- bzw. hochtemperaturbeständigen Füllstoff (z. B. Quarzsand oder Bariumsulfat oder Schamotte), einem Alkalisilicat (z. B. Natron- oder Kaliwasserglas) und einem Härter hergestellt. Der Härter soll durch die Abscheidung eines Siliciumdioxid-Gels aus dem Wasserglas das Erhärten bewirken und den Kitt wasser- und säurefest machen. Die mit einem Härter angeteigte Kittmasse muß ausreichend lange verarbeitbar sein und anschließend schnell erhärten.

Als Härter für Wasserglaskitte sind seit längerer Zeit Alkalisilicofluoride bekannt. Sie haben jedoch den Nachteil, daß sie bei der Einwirkung von Säuren Fluorwasserstoff abspalten, was zu Verunreinigungen der mit der Behälterauskleidung in Berührung kommenden Flüssigkeit, aber auch zu Korrosion von Metallen und mineralischen Auskleidungen führen kann. Bei feuerfesten Kitten, die als Füllstoff vornehmlich Schamotte enthalten, bewirkt der Fluorgehalt eine Herabsetzung der Feuerfestigkeit.

Die Deutsche Patentschrift 1 252 835 beschreibt einen Härter für säurefeste Wasserglaskitte auf der Basis von kondensiertem Aluminiumphosphat, das einer thermischen Behandlung unterworfen wurde. Zum Härten von Wasserglaskitten eignen sich auch die in der DE-C 1 769 999 angegebenen getemperten Phosphate des Zinks, Bleis, Eisens oder Magnesiums. All diesen Phosphat-Härtern ist der Nachteil gemeinsam, daß eine große Zeitspanne vergehen muß, bis die Wasserglaskitt-Ausmauerung gegen Wasser beständig ist. Diese Eigenschaft ist deshalb von großer Bedeutung, weil der Benutzer möglichst bald seine Anlage in Betrieb nehmen will und nicht wochenlang warten möchte, bis die Kittung gegen Wasser beständig ist. Üblicherweise werden derartige Anlagen vor ihrem Einsatz mit Wasser gereinigt. Daneben müssen selbstverständlich die Kittmassen eine ganze Reihe anderer Anforderungen erfüllen. Sie müssen beispielsweise eine ausreichend große Verarbeitungszeit aufweisen, aber anschließend rasch erhärten.

Die bekanntgewordenen Phosphathärter weisen nun nicht gleichzeitig das Optimum aller erforderlichen Eigenschaften auf. Insbesondere sind z. B. die Verarbeitungszeit und die Zeit bis zum Eintreten der Wasserbeständigkeit im allgemeinen stark gegenläufig. Hat man beispielsweise durch die Art oder die Konzentration eines Härters eine optimale Verarbeitungszeit von 1 bis 2 Stunden eingestellt, so beträgt die Zeit, bis die Wasserbeständigkeit eintritt etwa 20 Tage. Wird andererseits durch die Art oder die Konzentration eines Härters die Zeit bis zum Eintreten der optimalen Wasserbeständigkeit auf 1 bis 3 Tage eingestellt, so führt dies gleichzeitig zu einer Verringerung der Verarbeitungszeit des Kittes auf wenige Minuten, die nicht mehr akzeptiert werden kann.

Es bestand daher die Aufgabe, einen neuen Härter zu schaffen, der diese Nachteile nicht aufweist und der insbesondere nach Einarbeiten in die Kittmasse zu einer ausreichend langen Verarbeitungszeit, aber nur einer kurzen Zeit bis zum Eintreten der Wasserbeständigkeit des Kittes führt. Die vorliegende Erfindung löst diese Aufgabe.

Es wurde nun ein Verfahren zur Herstellung eines Aluminium enthaltenden getemperten Phosphats aus einem sauren, Aluminium enthaltenden Phosphat durch thermische Behandlung gefunden, in dem man dieses in einer ersten Stufe bis zur Gewichtskonstanz auf höchsten 400 °C und in einer zweiten Stufe, wiederum bis zur Gewichtskontanz, auf höchsten 750 °C erwärmt. Das Verfahren ist dadurch gekennzeichnet, daß man Lösungen, die neben Phosphat gleichzeitig Aluminium und Eisen enthalten, eindampft und man die so erhaltenen sauren Phosphate mit einem Atomverhältnis Al : Fe von 95 : 5 bis 5 : 95 und einem Atomverhältnis P : (Al + Fe) von 1,1 : 1 bis 3 : 1 thermisch behandelt. Diese Lösungen können auch unlösliche Bestandteile (Phosphate) enthalten, die sich beim Herstellen der Lösung bilden.

Die neuen kondensierten Eisen-Aluminium-Phosphate können dabei diskontinuierlich oder kontinuierlich, z. B. mit Hilfe eines Sprühturms für das Eindampfen und eines Drehrohrofens für das Tempern hergestellt werden. Sie zeigen optimale Eigenschaften, insbesondere eine ausreichend große Verarbeitungszeit bei einer sehr rasch eintretenden Beständigkeit gegen Wasser. Es ist wesentlich, daß das zu tempernde Phosphat hergestellt wird aus einer Lösung, die neben Phosphat gleichzeitig Aluminium und Eisen enthält. Das nachträgliche Mischen von getemperten Aluminiumphosphat und getempertem Eisenphosphat führt zwar zu Produkten gleicher Bruttozusammensetzung ; diese weisen aber nicht die vorteilhaften Eigenschaften des erfindungsgemäß verwendeten Mischphosphats auf, sondern zeigen lediglich Werte, die zwischen denen der beiden Einzelkomponenten liegen.

Zur Herstellung der neuen getemperten Mischphosphate lassen sich sämtliche in Phosphor lösliche Verbindungen des Eisens und des Aluminiums sowie die genannten Metalle selbst, einsetzen. Als verwendbare Verbindungen seien hier die Oxide, Hydroxide, Carbonate, Phosphate, Chloride, Oxychloride und Nitrate aufgeführt.

Diese Ausgangssubstanzen werden unter Einhaltung der angegebenen molaren Verhältnisse wie im Fall des reinen Aluminiumphosphats in Phosphorsäure eingetragen und die gemeinsame Lösung der Phosphate zunächst zur Trockne eingedampft. Sie werden dann der aus der DE-C

1 252 835 bekannten stufenweisen thermischen Behandlung unterworfen. Dabei werden sie zunächst bis zur Gewichtskonstanz bei höchsten 400 °C erhitzt. Die untere Grenze der Behandlungstemperatur liegt bei etwa 200 °C und hängt von der Zusammensetzung des verwendeten Eisen-Aluminium-Phosphats ab. Da die Kondensation mit einer Wasserabspaltung verbunden ist, läßt sich die untere Grenze der Behandlungstemperatur leicht durch eine thermogravimetrische oder differential-thermische Analyse ermitteln. Anschließend wird weiter aufgeheizt und erneut bis zur Gewichtskonstanz bei höchsten 750 °C getempert. Hierbei ist die Einhaltung einer Mindesttemperatur von 400 °C, vorzugsweise von 500 °C, vorteilhaft.

Da sich bei der thermischen Behandlung keine wesentlichen Änderungen der Metalloxid- und Phosphorpentoxidmengen ergeben, gelten die eingangs genannten Phosphorpentoxid-Metalloxid-Verhältnisse sowohl für die Ausgangskomponenten, die sauren Phosphate und die kondensierten Phosphate. Besonderes bevorzugt ist ein Atomverhältnis Al : Fe von 25 : 75 bis 75 : 25.

Es ist von Vorteil, wenn das Endprodukt der thermischen Behandlung ausschließlich Eisen-(III)-ionen, aber keine Eisen-(II)-ionen mehr enthält. Dies läßt sich erreichen, indem man Lösungen eindampft, in denen bereits das gesamte Eisen als $Fe^{3+}$ vorliegt oder indem man das eingedampfte noch Eisen-(II)-ionen enthaltende Phosphat unter oxidierenden Bedingungen tempert.

Für die Herstellung der Kitte eignen sich Kali- und Natronwassergläser, in denen das Verhältnis $SiO_2$/Alkalioxid in weiten Grenzen schwanken kann, beispielsweise zwischen 1,5 : 1 und 4 : 1. Diese Kitte sollten im allgemeinen 0,5 bis 10 Gew.-% des erfindungsgemäß herstellbaren Härters enthalten.

Dabei nimmt man allgemein auf 4 Gewichtsteile Härter 25 bis 35 Gewichtsteile Wasserglas sowie 90 bis 100 Gewichtsteile Füllstoff. Die verwendbaren Füllstoffe sind dem Fachmann bekannt. Verwendbar sind z. B. Siliziumoxid in seinen verschiedenen kristallographischen Formen einschließlich Kieselgur, ferner Aluminiumsilicate wie Kaolin und Tone, Siliziumcarbid, Korund oder Schwerspat. Die Auswahl des Füllstoffs oder des Füllstoffgemisches hängt jeweils vom Einsatzzweck des Wasserglas-Kittes ab.

Die Erfindung wird durch die folgenden Beispiele näher erläutert.

Vergleichsbeispiel 1

Man erwärmt eine Mischung aus 232,3 g $H_3PO_4$ 82 %ig und 62 ml Wasser auf 60 °C und streut dann unter Rühren 62,4 g $Al(OH)_3$ ein. Nach dem Abklingen der Reaktion verschuppt man die Lösung mit Hilfe einer auf etwa 200 °C geheizten Walze.

Danach wird das Material in einem Ofen, den etwas Luft durchströmt, auf 200 °C hochgeheizt und dann 2 Stunden bei dieser Temperatur belassen. Anschließend heizt man innerhalb von 2 Stunden auf 450 °C hoch und hält das Material 1 Stunde bei dieser Temperatur. Nach dem Abkühlen wird das Produkt in einem Mörser feinst gemahlen.

Ein damit hergestellter Wasserglaskitt ist erst nach 16 Tagen wasserbeständig.

Vergleichsbeispiel 2

Eine Mischung aus 549 g $H_3PO_4$ 82 %ig und 350 ml Wasser wird auf 60 °C vorgewärmt. Danach streut man portionsweise 111,7 g metallisches Eisen in Pulverform unter Rühren ein, wobei man vor jeder weiteren Zugabe das Abklingen der Gasentwicklung abwartet. Dann wird die Lösung, die in suspendierter Form bereits etwas festes Eisenphosphat enthält, auf 90 °C hochgeheizt und mit Hilfe einer etwa 200 °C heißen Walze verschuppt. Das Atomverhältnis $Fe^{3+}$ : $Fe^{2+}$ des Walzenprodukts betrug ca. 9 : 1.

Anschließend heizt man das Material in einem Ofen, den etwas Luft durchströmt, auf 200 °C hoch und beläßt dies 2 Stunden bei dieser Temperatur. Dann heizt man innerhalb von 2 Stunden weiter auf 500 °C hoch und tempert 1 Stunde bei dieser Temperatur. Nach dem Abkühlen wird das Produkt in einem Mörser feinst gemahlen.

Ein damit hergestellter Wasserglaskitt ist erst nach 12 Tagen wasserbeständig.

Vergleichsbeispiel 3

100 Gew.-Teile des getemperten Aluminiumphosphat des Vergleichsbeispiels 1 und 100 Gew.-Teile des getemperten Eisenphosphats von Vergleichsbeispiel 2 werden vermischt und in einer Kugelmühle 5 Minuten gemahlen. Ein mit diesem gemischten Phosphat hergestellter Wasserglaskitt ist erst nach 13 Tagen wasserbeständig.

Beispiel

Man erwärmt eine Mischung von 549 g $H_3PO_4$ 82 %ig mit 100 ml Wasser auf 60 °C und streut dann unter Rühren 55,9 g metallisches Eisen in Pulverform portionsweise ein, wobei vor jeder Zugabe das Abklingen der Gasentwicklung abzuwarten ist. Dann werden 78 g $Al(OH)_3$, welche mit 100 ml Wasser angeteigt sind, eingerührt. Anschließend wird die Mischung eine Stunde bei 100 °C gehalten. Danach wird das Material mit Hilfe einer auf etwa 200 °C geheizten Walze verschuppt.

Anschließend heizt man das Produkt in einem Ofen, der etwas von Luft durchströmt wird, auf 200 °C hoch und beläßt es bis zur Gewichtskonstanz bei dieser Temperatur. Dann heizt man innerhalb von 2 Stunden auf 500 °C weiter hoch und tempert ca. 1 Stunde bei dieser Temperatur bis zur Gewichtskonstanz. Nach dem Abkühlen wird das Material in einem Mörser feinst gemahlen.

Ein mit diesem Mischphosphat hergestellter Wasserglaskitt war bereits nach einem Tag voll wasserbeständig.

Für die Herstellung der Kittmassen wurden jeweils 34 g Kaliwasserglas (Molverhältnis $SiO_2 : K_2O$ = 2,9 : 1,96 g Quarz sand und 3,8 g des getemperten Phosphathärters vermischt. Es wurden jeweils mehrere zylindrische Prüfkörper (Durchmesser und Höhe je 25 mm) geformt und erhärten gelassen. Im Abstand von je einem Tag wurde die Wasserbeständigkeit durch Einlegen in Wasser bestimmt. Beständige Prüfkörper zerfallen dabei nicht mehr. Die Verarbeitungszeit betrug in allen Beispielen 1 bis 2 Stunden.

### Ansprüche

1. Verfahren zur Herstellung eines Aluminium enthaltenden getemperten Phosphats aus einem sauren, Aluminium enthaltenden Phosphat durch thermische Behandlung, indem man dieses in einer ersten Stufe bis zur Gewichtskonstanz auf höchstens 400 °C und in einer zweiten Stufe wiederum bis zur Gewichtskonstanz auf höchsten 750 °C erwärmt, dadurch gekennzeichnet, daß man Lösungen, die neben Phosphat gleichzeitig Aluminium und Eisen enthalten, eindampft und man die so erhaltenen sauren Phosphate mit einem Atomverhältnis Al : Fe von 95 : 5 bis 5 : 95 und einem Atomverhältnis P : (Al + Fe) von 1,1 : 1 bis 3 : 1 thermisch behandelt.

2. Verwendung des gemäß Anspruch 1 erhaltenen Phosphats als Härter für Wasserglaskitte.

### Claims

1. A process for the manufacture of a tempered, aluminum-containing phosphate from an acidic, aluminum-containing phosphate by thermal treatment, which comprises heating the aluminum-containing phosphate in a first step to a temperature not exceeding 400 °C until its weight remains constant, and in a second step to a temperature not exceeding 750 °C, likewise until its weight remains constant, wherein solutions containing aluminum and iron simultaneously with the phosphate are evaporated, and the acidic phosphates so obtained having an atomic ratio Al : Fe of from 95 : 5 to 5 : 95 and an atomic ratio P : (Al + Fe) of from 1.1 : 1 to 3 : 1 are thermally treated.

2. Use of the phosphate obtained as claimed in Claim 1 as hardener for water glass cements.

### Revendications

1. Procédé de préparation d'un phosphate cuit contenant de l'aluminium, à partir d'un phosphate acide contenant de l'aluminium, par traitement thermique, selon lequel on chauffe ce phosphate de départ, dans une première étape, à une température d'au plus 400 °C jusqu'à poids constant et, dans une seconde étape, à une température d'au plus 750 °C, à nouveau jusqu'à poids constant, procédé caractérisé en ce qu'on évapore des solutions qui, en plus du phosphate, contiennent de l'aluminium et du fer et on soumet à un traitement thermique les phosphates acides ainsi obtenus dans lesquels le rapport atomique Al : Fe est compris entre 95 : 5 et 5 : 95 et le rapport atomique P : (Al + Fe) est compris entre 1,1 : 1 et 3 : 1.

2. Application du phosphate obtenu selon la revendication 1 comme durcisseur pour des ciments au verre soluble.